# EUROPÄISCHE PATENTSCHRIFT

(11) **EP 0 889 288 B1**
(45) Veröffentlichungstag und Bekanntmachung des Hinweises auf die Patenterteilung: **02.05.2002**
(21) Anmeldenummer: 98111308.7
(22) Anmeldetag: 19.06.1998
(51) Int. Cl.: F23M 5/08, F23D 14/46

(54) **Brenner, insbesondere Gasbrenner**
Burner, particularly gas burner
Brûleur en particulier brûleur à gaz

(30) Priorität: 03.07.1997 DE 19728397
(43) Veröffentlichungstag der Anmeldung: 07.01.1999
(73) Patentinhaber: ROBERT BOSCH GMBH, 70442 Stuttgart (DE)
(72) Erfinder: Bienzle, Marcus, 73760 Ostfildern (DE)

(56) Entgegenhaltungen:
- AT-B- 399 034
- AT-B- 399 934
- CH-A5- 679 801
- DE-A1- 3 331 340

## Beschreibung

### Stand der Technik

Die Erfindung betrifft einen Brenner mit einer Brennkammer, die Brennkammerwände aufweist, wobei der Brennkammer ein wärmeentwickelder Brennkörper zugeordnet ist, und wobei an den Brennkammerwänden, der Brennkammer zugekehrt Kondensat-Auffangvorrichtungen angeordnet sind.

Ein solcher Brenner ist aus der AT-A-399 034 bekannt. Hierbei sind an den vertikalen Brennkammerwänden Gitter befestigt. Die Gitter stehen dabei im Abstand zu den Brennkammerwänden. Der Abstand ist kleiner als der Durchmesser eines Kondensattropfens gewählt. Wenn sich nun Kondensattropfen bilden, so können diese nicht von der kühlen Brennkammerwand abfliesen. Damit entstehen keine Zonen, in denen sich das Kondensat sammelt und konzentrierte Korrossionsschäden hervorruft. Das gleichmäßig über die Brennwände verteilte Kondensat kann nur noch lokal begrenzt seine korrodierende Wirkung entfalten.

Bei solche Brennern haben die Gitter nur eine begrenzte Speicherkapazität für das Kondensat. Wenn diese erschöpft ist, dann fließt das Kondensat unkontrolliert ab, was zu den bekannten Problemen führt.

### Vorteile der Erfindung

Es ist Aufgabe der Erfindung, das Kondensat sicher und zuverlässig von der Brennkammerwand eines Brenners abzuleiten.

Diese Aufgabe der Erfindung wird dadurch gelöst, daß die Kondensat-Auffangvorrichtung als poröser Körper ausgebildet ist, der im Inneren von einer Kanalstruktur durchzogen ist und der flächig direkt auf die Brennkammerwand aufgesetzt ist. Der poröse Körper bildet einen kompakten Speicherblock, in dem das Kondensat aufgenommen wird. Die Kanalstruktur entfaltet eine Kapillarwirkung mit der das Kondensat aufgesaugt wird. Da das Kondensat vollständig von der Brennerwand abgeleitet wird, kann auch keine Korrossion mehr entstehen.

Nach einer bevorzugten Ausgestaltung der Erfindung ist es vorgesehen, daß die Brennkammerwände gekühlt sind, und daß der/die porösen Körper im Bereich der gekühlten Zonen angeordnet sind.

Die porösen Körper sind demnach an solchen Stellen positioniert, an denen das Kondensat entstehen wird.

Wenn die Brenner dabei so ausgestaltet sind, daß der poröse Körper sich ausgehend von der gekühlten Zone bis hin in einen Bereich der Brennkammer erstreckt, in der die Temperatur oberhalb der Verdampfungstemperatur des Kondensats liegt, dann wird das aufgenommene Kondensat wieder unmittelbar aus dem porösen Körper heraustransportiert. Insbesondere kann das Kondensat in die Zone der Brennstoff-/Luftzufuhr des Brenners abgeleitet werden. Das Brennstoff-Gemisch wird somit zur NOx-Reduktion befeuchtet. Wenn vorgesehen ist, das nicht alleine die gekühlten Zonen, sondern die gesamten Brennkammerwände vollständig mit isolierenden, porösen Körpern verkleidet sind, dann kann auf die üblichen Brennkammerwände-lsolierungen verzichtet werden. Dabei sollten die porösen Stoffe aus faserfreien Feststoffen bestehen, die nicht gesundheitsgefährdend sind. In diesem Sinne kann der poröse Körper aus einem feinporösen Kermamikschaum oder einem Metallschaum bestehen. Diese Stoffe sind formstabil und einfach zu handhaben. Nicht zuletzt können sie auch billig bezogen werden.

Denkbar ist es auch, daß der poröse Körper als Schüttung, bestehend aus einer Vielzahl von Teilkörpern ausgebildet ist, die in einer Halterung an der Brennkammerwand untergebracht sind.

Die Erfindung wird im folgenden anhand eines in den Zeichnungen dargestellten Ausführungsbeispieles näher erläutert. Es zeigen:
- Fig.1: Eine schematische Darstellung eines Brenners und
- Fig.2: ein in der Fig.1 mit A dargestelltes, vergrößert gezeigtes Detail.

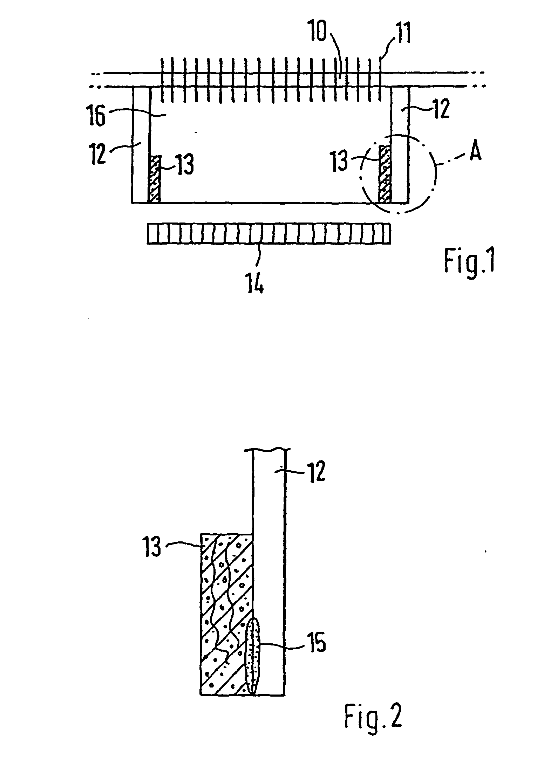

Die Fig.1 zeigt einen Brenner mit einer Brennkammer 16. Die Brennkammer 16 wird von den Brennkammerwänden 12 umgeben. Über der Brennkammer 16 ist ein Wärmetauscher angeordnet. Der Wärmetauscher besteht aus mehreren, in der Bildebene parallel hintereinander liegenden Kühlrohren 10. Diese Kühlrohre 10 durchsetzen einen Lamellenblock 11.

Unterhalb der Brennkammer 16 befindet sich eine Brennerplatte 14. Die Brennerplatte 14 ist an einen Ansaugkanal angeschlossen, der in der Zeichnung aus Gründen der Übersichtlichkeit nicht dargestellt ist. Über den Ansaugkanal wird der Brennerplatte 14 ein Gas-Luftgemisch zugeleitet.

An ihrem, der Brennerplatte 14 zugekehrten unteren Randbereich sind auf die Brennkammerwände 12 poröse Körper 13 aufgesetzt. Die porösen Körper 13 bilden dabei einen geschlossenen Ring, der die Brennkammerwände 12 umlaufend abdeckt. Die porösen Körper 13 sind flächig auf die Brennkammerwände 12 aufgesetzt. In ihrem Inneren sind sie von einer Kanalstruktur durchzogen. Die lichten Weiten der einzelnen Kanäle sind dabei so ausgebildet, daß eine Kapillarwirkung entstehen kann. Geeignet ist hierbei beispielsweise die Verwendung eines Keramikschaumes.

Im Betrieb wird das zugeführte Gas-Luftgemisch an der Brennerplatte 14 verbrannt. Die erzeugte Wärme wird dem Wärmetauscher zugeführt, der diese über seinen Lamellenblock 11 den Kühlrohren 10 zuleitet. An den Brennkammerwänden 12 kann sich Kondensat niederschlagen. Dies ist vor allem dannn der Fall, wenn die Brennkammerwände selbst gekühlt sind. Das Kondensat rinnt entlang der Brennkammerwand 12 in Richtung zu den porösen Körpern 13. Hier wird es in der Kontaktzone zwischen der Brennkammerwand 12 und den porösen Körpern 13 aufgenommen und infolge der Kapillarwirkung gleichmäßig im porösen Körper 13 verteilt.

Die Fig. 2 zeigt die Anordnung eines porösen Körpers 13 auf einer Brennkammerwand 12 in vergrößertem Maßstab. Wie aus dieser Darstellung ersichtlich ist, ist der poröse Körper 13 im Bereich einer gekühlten Zone 15 angeordnet. Der poröse Körper 13 nimmt das Kondensat, welches sich an dieser gekühlten Zone 15 niederschlägt auf. Mit seiner, der Brennkammerwand 12 abgekehrten Seite ragt der poröse Körper 13 in die Brennkammer 16 vor. Der Überstand in Richtung zu der Brennkammer 16 ist dabei so gewählt, daß der poröse Körper 13 teilweise in einem Bereich angeordnet ist, an dem eine Temperatur oberhalb der Verdampfungstemperatur des Kondensats vorherrscht. Dies hat zur Folge, daß das Kondensat aus dem porösen Körper 13 ausdampft. Hierdurch wird erreicht, daß das Kondensat direkt von der Behälterwandung 12 abgeleitet und wieder verdampft wird.

## Patentansprüche

1. Brenner mit einer Brennkammer, die Brennkammerwände aufweist, wobei der Brennkammer ein wärmeentwickelnder Brennkörper zugeordnet ist, und wobei an den Brennkammerwänden der Brennkammer zugekehrt Kondensat-Auffangvorrichtungen angeordnet sind,
**dadurch gekennzeichnet,**
**daß** die Kondensat-Auffangvorrichtung als poröser Körper (13) ausgebildet ist, der im Inneren von einer Kanalstruktur durchzogen ist und der flächig direkt auf die Brennkammerwand (13) aufgesetzt ist.

2. Brenner nach Anspruch 1,
**dadurch gekennzeichnet,**
**daß** die Brennkammerwände (12) gekühlt sind, und
**daß** der/die porösen Körper (13) im Bereich der gekühlten Zonen angeordnet sind.

3. Brenner nach Anspruch 2,
**dadurch gekennzeichnet,**
**daß** der poröse Körper (13) sich ausgehend von der gekühlten Zone bis hin in einen Bereich der Brennkammer (16) erstreckt in der die Temperatur oberhalb der Verdampfungsteperatur des Kondensats liegt.

4. Brenner nach Anspruch 1 oder 2,
**dadurch gekennzeichnet,**
**daß** die Brennkammerwäande (12) vollständig mit wärmeisolierenden, porösen Körpern (13) verkleidet sind.

5. Brenner nach einem der Ansprüche 1 bis 4,
**dadurch gekennzeichnet,**
**daß** der poröse Körper (13) als feinporöser Keramikschaum oder als Metallschaum ausgebildet ist.

6. Brenner nach einem der Ansprüche 1 bis 4,
**dadurch gekennzeichnet,**
**daß** der poröse Körper (13) als Schüttung bestehend aus einer Vielzahl von Teilkörpern ausgebildet ist, die in einer Halterung an der Brennkammerwand (12) untergebracht sind.

## Claims

1. Burner with a combustion chamber which has combustion-chamber walls, the combustion chamber being assigned a heat-generating combustion body, and condensate-collecting devices being arranged, facing the combustion chamber, on the combustion-chamber walls, **characterized in that** the condensate-collecting device is designed as a porous body (13), though the inside of which a duct structure passes and which is directly placed over its area onto the combustion-chamber wall (13).

2. Burner according to Claim 1, **characterized in that** the combustion-chamber walls (12) are cooled, and **in that** the porous body/bodies (13) are arranged in the region of the cooled zones.

3. Burner according to Claim 2, **characterized in that** the porous body (13) extends, starting from the cooled zone, into a region of the combustion chamber (16) in which the temperature is above the evaporation temperature of the condensate.

4. Burner according to Claim 1 or 2, **characterized in that** the combustion-chamber walls (12) are fully lined with heat-insulating porous bodies (13).

5. Burner according to one of Claims 1 to 4, **characterized in that** the porous body (13) is formed as a finely porous ceramic foam or as a metal foam.

6. Burner according to one of Claims 1 to 4, **characterized in that** the porous body (13) is formed as a bulk product consisting of a multiplicity of part-bodies which are accommodated in a holding device on the combustion-chamber wall (12).

## Revendications

1. Brûleur présentant une chambre de combustion délimitée par des parois, un corps de combustion générant de la chaleur étant associé à cette chambre tandis que sur les parois de la chambre et du côté de celle-ci sont montés des dispositifs de collecte de condensat,
**caractérisé en ce que**
chaque dispositif de collecte du condensat est constitué par un corps poreux (13), présentant intérieurement une structure à canaux et appliqué à plat directement sur la paroi (12) de la chambre de combustion.

2. Brûleur selon la revendication 1,
**caractérisé en ce que**
les parois (12) de la chambre de combustion sont refroidies, et le(s) corps poreux (13) est (sont) monté(s) près des zones refroidies.

3. Brûleur selon la revendication 2,
**caractérisé en ce que**
le corps poreux (13), partant de la zone refroidie s'étend jusqu'à une zone de la chambre de combustion (16) dans laquelle la température est supérieure à la température de vaporisation du condensat.

4. Brûleur selon la revendication 1 ou 2,
**caractérisé en ce que**
les parois (12) de la chambre de combustion sont totalement recouvertes par des corps poreux (13) isolants thermiques.

5. Brûleur selon l'une quelconque des revendications 1 à 4,
**caractérisé en ce que**
le corps poreux (13) est une mousse céramique à pores fins ou une mousse métallique.

6. Brûleur selon l'une quelconque des revendications 1 à 4,
**caractérisé en ce que**
le corps poreux (13) est un garnissage composé d'un certain nombre de corps élémentaires montés dans un support sur la paroi (12) de la chambre de combustion.
